Europäisches Patentamt

European Patent Office

Office européen des brevets

(11) Publication number: **0 202 066 B1**

## EUROPEAN PATENT SPECIFICATION

(45) Date of publication of patent specification: **18.12.91**  (51) Int. Cl.⁵: **B01D 46/02, B01D 46/24**

(21) Application number: **86303423.7**

(22) Date of filing: **06.05.86**

㊴ **Filter.**

(30) Priority: **10.05.85 GB 8511842**

(43) Date of publication of application:
**20.11.86 Bulletin 86/47**

(45) Publication of the grant of the patent:
**18.12.91 Bulletin 91/51**

(84) Designated Contracting States:
**AT BE CH DE FR GB IT LI LU NL SE**

(56) References cited:
**EP-A- 0 169 330          CH-A- 317 867
DE-A- 1 607 764          DE-A- 3 024 324
DE-B- 1 072 458          DE-B- 1 197 736
GB-A- 922 858            GB-A- 1 182 772
US-A- 4 481 022**

(73) Proprietor: **NUMATIC INTERNATIONAL LIMITED**
**2 Knoll Road**
**Camberley Surrey(GB)**

(72) Inventor: **Duncan, Christopher Robert**
**"The Lodge"**
**Beaminster Dorset(GB)**

(74) Representative: **Evans, David Charles et al**
**F.J. CLEVELAND & COMPANY 40-43, Chancery Lane**
**London, WC2A 1JQ(GB)**

## Description

The present invention relates to filters and particularly filters for air filtration, to filter elements per se and to vacuum cleaning systems incorporating such filters.

Vacuum cleaners comprising a motor housing, a hollow filter body, a dust container, and motor means for inducing a negative pressure about a spaced plurality of semi-rigid tubular filter elements closed at their ends within said body are known articles of manufacture. In these vacuum cleaners the tubular filter elements are open at their ends adjacent the motor means whereby the negative pressure acts via the interior of the filter elements. The filter elements are made of a material such as sintered polyethylene with a low friction filtration face i.e. the exterior in this case, and a rough interior face.

A vacuum cleaner provided with flexible tubular filter elements closed at their ends adjacent the motor means is described in US-A-4,481,022. These filter elements are formed of flexible bags having the same inner and outer surfaces and require to be placed in tension during use.

In the prior art, agitator means are provided within the filter body to act upon the free ends of the filter elements remote from the motor means to dislodge particles adhering to the exterior of the filter elements,

Various difficulties have arisen with vacuum cleaners of this type. In the first place because the semi-rigid tubular filter elements are subjected to negative pressure it is necessary to support these by means of reinforcement or by support frames. Further because the agitator is positioned at the free ends of the filter element it tends to work in practice in an atmosphere suffused with dirt and dust. Accordingly the agitator tends to jam or at least it is difficult to operate and/or is subjected to excessive wear.

Further because of the need to provide an effective working space beside each tubular filter element, the filter elements must be spaced a reasonable distance apart. Since manufacturing constraints make it easier to produce filter elements with a circular cross section a comparatively large space is left between adjacent filter elements. Further these filter elements should be as long as possible in order to increase filter efficiency. In the result in use the large spaces between the adjacent filter elements become clogged, as they are designed to do, with dust to form a cake. Because of the large volume of cake so formed agitation of the free ends of the filter element causes large volumes of cake to descend into the dust container. Although it is possible to design a container to accommodate the volume of dust so obtained the resulting design causes the vacuum cleaner to be somewhat unwieldly.

The object of this invention is, therefore, to provide a filter surface which can be readily agitated for cleaning purposes and which voids itself into the dust container.

To this end the invention provides in one aspect a rigid or substantially rigid, self-supporting, hollow filter element, which filter element is closed at one end and is characterised by being provided with a low friction filtering surface on its interior, said filtering surface being adapted to retain dust only when a negative pressure gradient acts across said filtering surface from the interior to the exterior, whereby on termination of said negative pressure gradient, said low-friction filtering surface assists release of dust particles from said filter element.

The present invention is further characterised in that the negative pressure is applied to the exterior of the filter elements so as to draw dust laden air into their interiors. This arrangement reduces the necessity for reinforcement or supports for the filter elements because there is no possibility of the filter elements imploding.

The interior of the filter elements is preferably provided with a low friction surface such as may be produced by the use of sintered polyethylene produced in tubular form. However paper and cloth filter elements, suitably treated so as to be rigid or semi rigid can also be used.

The filter elements are preferably mounted upon a plate in a spaced parallel relation with each other. The plate is so arranged that the filter elements can extend from the filter plate toward the motor means. The plate may be circular and in which case the filter elements may be concentrically arranged. Where the filter elements are rigid they should be mounted on a resilient base, or via a resilient mount, i.e. a mount made of rubber.

Agitator means may be provided to act on the filter elements to dislodge dust therefrom. The agitator means may be a rack and pinion driven rotary plate having lugs which contact the free ends of the filter elements to shake them when the rack is actuated from outside the body of the vacuum cleaner. Because the dust and dirt entrained in the air entering the vacuum cleaner of the present invention is contained within the filter elements, the agitator means works in a clean atmosphere, and hence does not wear or jam.

The vacuum cleaner of the present invention is preferably designed such that the total volume of the interior of the filter elements is no greater than that of the dust container. Preferably one or more cloth filters are additionally applied between the filter elements of the present invention and the vacuum motor.

Accordingly the present invention also embraces a method of air filtration which comprises drawing dust laden air under negative pressure into a plurality of rigid or semi-rigid closed tubular filter elements, characterised in that the negative pressure is applied to the exterior of the filter elements so as to draw dust laden air to the interior thereof. The invention also provides a filter for use in the above method which comprises a support plate, carrying a spaced plurality of tubular rigid or semi-rigid filter elements extending generally perpendicular thereto, characterised in that the filter elements are closed at their ends remote from the plate, and wherein the elements are adapted to extend downstream of the air flow.

In a further aspect of the invention there is provided a tubular filter element formed with a low friction surface upon its interior, the filter element is closed at one of its ends, and preferably screw threaded at the other without any lip or other obstruction on its interior surface such that the interior surface of the filter element is continuous. In a further aspect of the invention there is provided a vacuum cleaner as hereinbefore set forth having a self cleaning facility, characterised in that the interior of each filter element has a surface having a designed low co-efficient of friction, and in that the motor means has a matched power output, the arrangement being such that when filtration is complete, and the motor is switched off, the weight of the dust unsupported by vacuum, exceeds the co-efficient of friction and hence falls into the dust container.

The invention will now be described, by way of illustration only, with reference to the accompanying drawings wherein:-

Figure 1 shows a vertical view ghosted in part cross-section, of a vacuum cleaner incorporating filter elements of the present invention.

Figure 2 shows a filter element of the invention in elevation.

Figure 3 shows an elevation of a filter assembly of the invention.

Figure 4 shows a detail of the filter element and filter element support in partial cross-section.

Figure 5 shows an elevation in partial cross-section of a dust container of the invention, and

Figure 6 shows a transverse section along a line A:A of Figure 1.

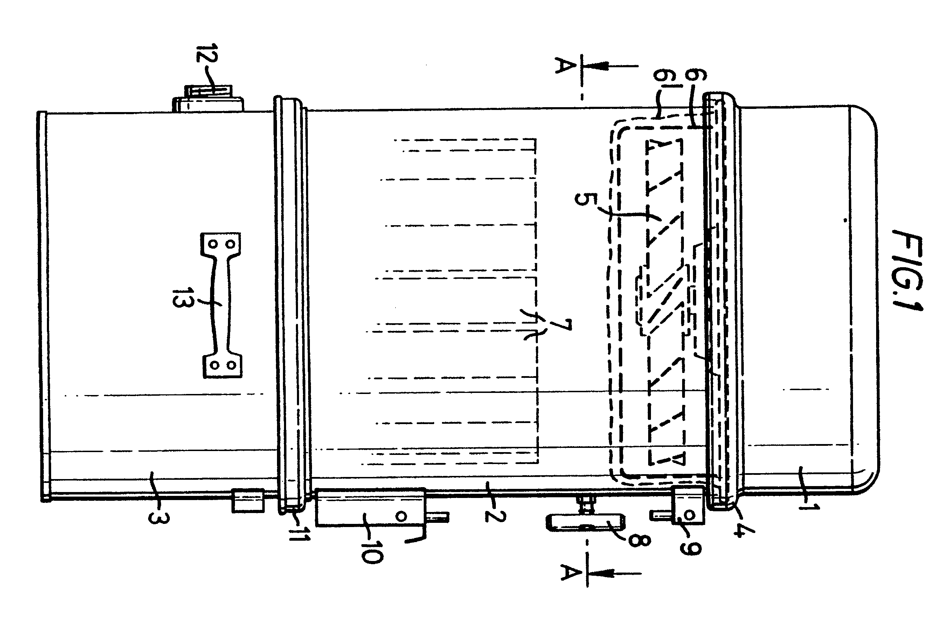

With reference to Figure 1 a vacuum cleaner of generally circular transverse cross section is provided with an upper motor unit 1, an intermediate filter casing 2, and a dust container 3. Radially outwardly extending portions 4 and 11 respectively provide means for interconnection between the motor unit 1 and the filter casing 2, and the filter casing 2 and the dust container 3 respectively.

Motor unit 1 is provided with a downwardly depending fan 5, surrounded by a perforated frame 6, said frame 6 being optionally overlayed by a filter cloth 6' in standard fashion.

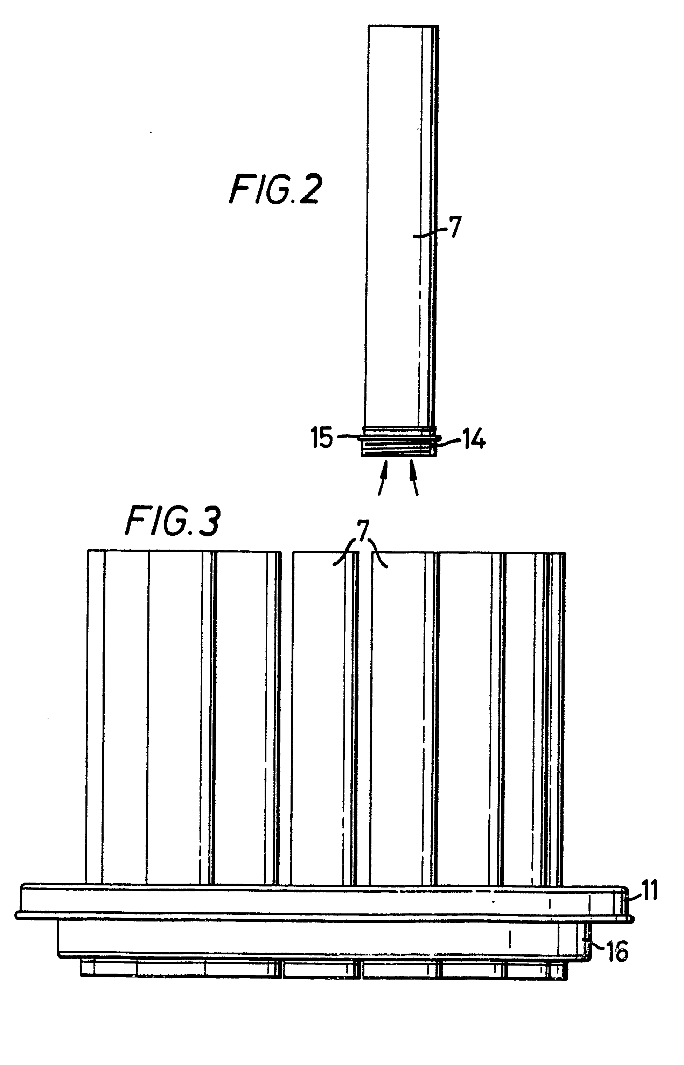

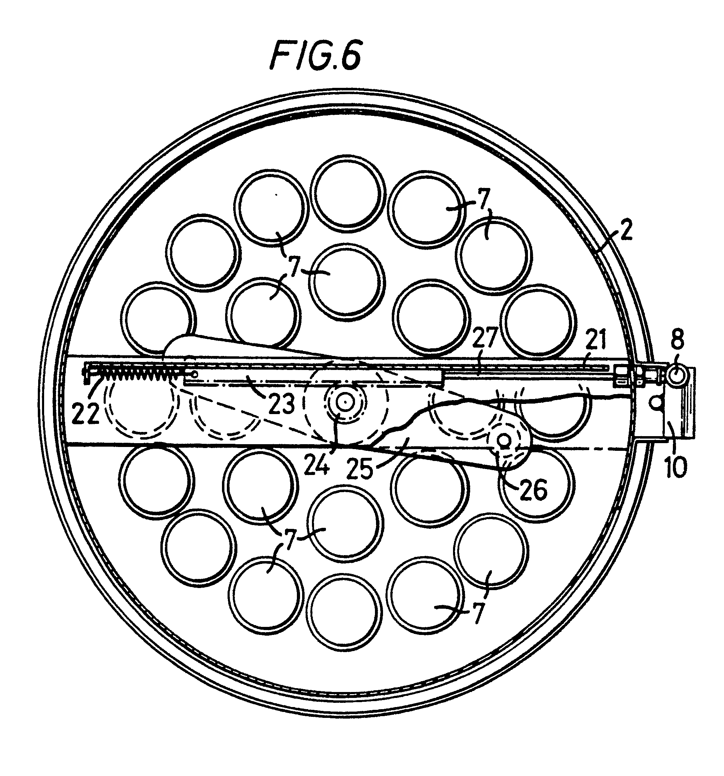

The upper end of the filter casing 2 accommodates the fan 5. Situated spacially below said fan 5 are a plurality of filter elements 7 in two concentric arrays as shown in Figures 3 and 6. As shown in Figure 2 each filter element 7 is in the form of a hollow cylinder closed at its upper end and terminating toward its lower open end with a screw threaded portion 14 having a radially outwardly extending flange 15 intermediate the threaded portion 14 and said cylinder body. The screw threaded portion 14 engages in a corresponding female bore 17 formed as part of a circular mounting plate 16 which terminates in the radially outward direction in the filter casing flange 11. The mounting plate 16 is disposed downwardly sealing flange 11 to project into the container 3 as shown in Figure 1 and is secured by means of suitable connector 18 such as a toggle fastening or a screw. The volume of the container 3 occupied by the depending mounting plate 16 should be equal to or greater than the volume of the filter elements, so that on removal of container 3 from casing 2, there is sufficient space within container 3 to accommodate dust and dirt accumulated within the filter elements 7.

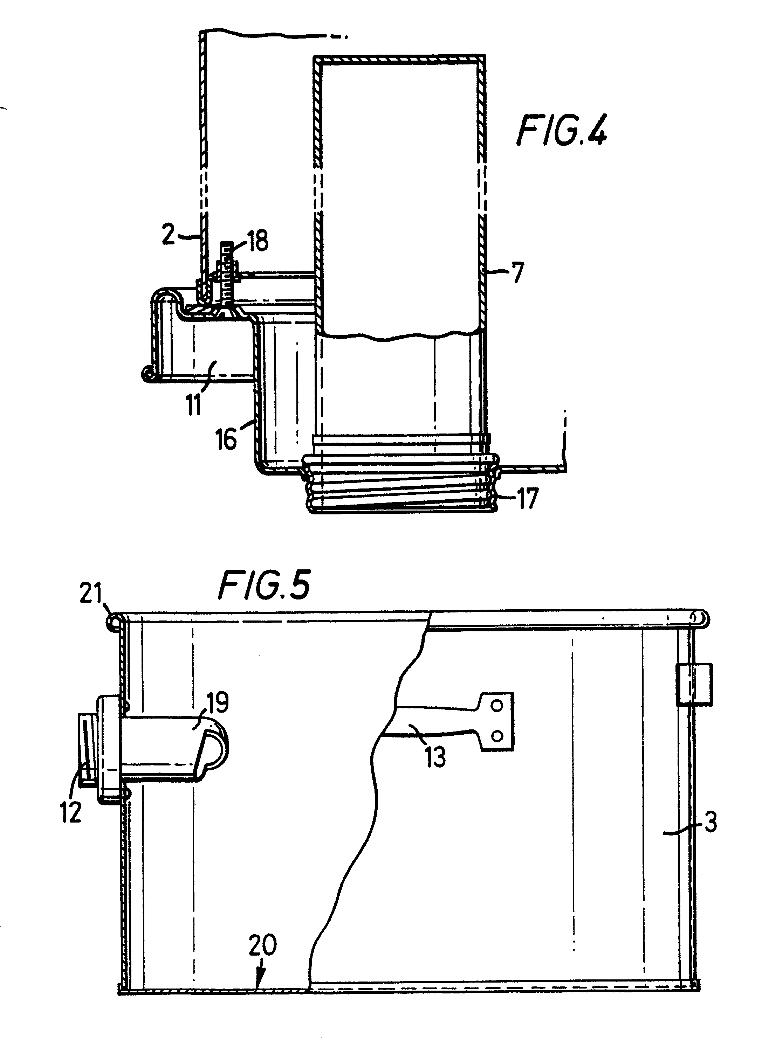

With reference to Figure 5, the dust container 3, which is of a generally hollow cylindrical configuration is provided with a dust-laden air inlet 12 terminating inwardly in a deflector 19 to deflect the dust-laden air downwardly toward the floor 20 of the dust container. The container is provided with handles 13 for ready manipulation.

Disposed within the filter casing 1 at a position immediately below the filter cloth 6' is the agitator means. The agitator means comprises a handle 8 attached to a rack operating rod 27 operatively connected to a rack 23 which is spring biassed by tension spring 22 to a frame 21. The rack 23 operates upon a pinion 24 integral with an agitator element 25. The agitator element is elongate and terminates at each of its ends in a downwardly depending agitator bar 26 having a diameter which exceeds the space between radially adjacent filter elements.

In use of the agitator means, the handle 8 is pulled outwardly of the filter casing 2, thereby the cause the rack 23 to move against the spring bias 22 and hence spin the element 25. The agitator bars 26 are thereby caused to sequentially dispace the closed ends of the filter elements 7 thereby to dislodge dust adhering to their interiors. Release of the handle 8 causes the rack 23 to move in the opposite direction under spring tension, and hence causes the agitator element 25, and hence the agitator bars 26, to move in the opposite direction.

In use, the motor unit is operated to cause the fan 5 to induce a vacuum within the filter casing 2. Air is therefore drawn into the air inlet 12 and via the dust container 3 to the interior of the filter elements 7. Heavy particles of dust entrained in the inlet air will fall to the floor 20 of the container 3, but lighter particles impinge upon the interior of the filter element 7. The filter elements 7 are formed of sintered polyethylene having a smooth low-friction internal surface. After a period of use the interior of the elements 7 will become clogged and the filtering efficiency will decrease. At this point the motor unit is switched off and hence the negative pressure ceases. Because of the low friction internal surface of the filter elements 7, large amounts of dust, unsupported by the negative pressure, will then fall into the dust container 3.

With the motor still switched off, the agitator handle 8 is pulled sharply several times. As explained previously, this causes the filter elements 7 to be sequentially tapped by the agitator bars 26 and hence any further particles adhering to the internal surfaces of the filter elements 7 are dislodged.

The dust container can then be removed by releasing quick-release catches (not shown) between the casing 2 and the dust container 3 and the assembly subsequently reassembled for further use.

In a preferred form of the invention, pressure sensors are provided within the dust container 3 and the filter casing 2. When the difference between their values exceeds a given value a warning is given. Alternatively, when the differential pressure is greater than a certain value the motor unit can be switched off and the agitator automatically driven.

It will also be appreciated that the power requirements for the motor in accordance with the present invention are matched to the characteristics of the filter elements, this allows self-cleaning of the device without compaction of the filter particles into a cake.

## Claims

1. A rigid or substantially rigid, self-supporting, hollow filter element, which filter element is closed at one end and is characterised by being provided with a low friction filtering surface on its interior, said filtering surface being adapted to retain dust only when a negative pressure gradient acts across said filtering surface from the interior to the exterior, whereby, on termination of said negative pressure gradient, said low-friction filtering surface assists release of dust particles from said filter element.

2. An element according to claim 1 formed of sintered polyethylene.

3. An element according to either of claims 1 or 2 formed with a cylindrical configuration, terminating at its end remote from the closed end in a screw threaded portion.

4. Assembly of a plurality of filter elements according to any one of claims 1 to 3 disposed on a mounting plate in regularly spaced relation.

5. An assembly according to claim 4 wherein the mounting plate is of a circular transverse cross section, and the filter elements are concentrically arranged.

6. Filter apparatus comprising a casing, means for generating a negative pressure within the casing, thereby to apply the negative pressure to an assembly according to claims 4 or 5, or to a filter element according to claims 1 to 3 in operative connection therewith.

7. Vacuum cleaning apparatus comprising a body portion which houses an assembly according to claims 4 and 5, or a filter element according to any of claims 1 to 3; a motor-unit for generating a negative pressure gradient across the filtering surface of each filter element from the interior to the exterior; a conduit in fluid communication with said body portion and terminating remote from said body portion in an inlet portion; and a dust receptacle whereby, in operation, air is drawn into the body portion through said inlet portion and via said conduit to precipitate dust and dirt particles entrained therein on the interior filtering surfaces of said filter elements and, on termination of said negative pressure gradient, said dust and dirt particles are received in said dust receptacle.

8. Apparatus according to claim 6 or claim 7 wherein the casing is provided with means for agitating the filter elements.

9. Apparatus according to claim 8 wherein the agitating means comprises a rack and pinion driven rotary plate formed with one or more lugs which sequentially contact the closed ends of the filter elements on actuation.

10. Apparatus according to any of claims 6 to 9 characterised in that a removable dust receptacle is situated inferior to the filter elements and in that the filter assembly is adapted to eject dust into said receptacle to occupy a volume which does not exceed the total volume of the interiors of the filter elements.

11. Apparatus according to any of claims 6 to 10, additionally comprising differential pressure sensing means associated with the positive and negative pressure sides of the filter elements, thereby to sense when the filter elements have become clogged.

12. A method of air filtration which comprises drawing dust-laden air under a negative-pressure gradient into a plurality of rigid or substantially rigid, self supporting, hollow filter elements, each filter element being closed at one end and characterised by being provided with a low friction filtering surface on its interior, said filtering surface being adapted to retain dust only when a negative pressure gradient acts across said filtering surface from the interior to the exterior, whereby, on termination of said negative pressure gradient, said low friction filtering surface facilitates the release of dust particles from said filter element.

**Revendications**

1. Elément de filtre creux, rigide ou substantiellement rigide, autoportant, lequel élément de filtre est fermé à une première extrémité et est caractérisé en ce qu'il est pourvu, du côté intérieur, d'une surface filtrante à faible frottement, ladite surface filtrante étant apte à retenir la poussière uniquement lorsqu'un gradient de pression négatif agit à travers ladite surface filtrante de l'intérieur vers l'extérieur, et de ce fait, lorsque cesse le gradient de pression négatif, ladite surface filtrante à faible frottement contribue à la séparation des particules de poussière dudit élément de filtre.

2. Elément suivant la revendication 1, constitué de polyéthylène fritté.

3. Elément suivant l'une ou l'autre des revendications 1 ou 2, doté d'une configuration cylindrique, se terminant par une portée filetée à son extrémité opposée à l'extrémité fermée.

4. Assemblage d'une pluralité d'éléments de filtre suivant l'une ou l'autre des revendications 1 à 3, disposés sur une plaque de montage en des positions régulièrement espacées l'une de l'autre.

5. Assemblage suivant la revendication 4, dans lequel la plaque de montage présente une section transversale circulaire et les éléments de filtre sont disposés concentriquement.

6. Dispositif de filtre comprenant un boîtier, des moyens pour créer une pression négative à l'intérieur du boîtier, pour appliquer ainsi la pression négative à un assemblage suivant les revendications 4 ou 5, ou à un élément de filtre suivant les revendications 1 à 3 en liaison opératoire avec ceux-ci.

7. Appareil d'aspiration comprenant une partie formant corps qui accueille un assemblage suivant les revendications 4 et 5, ou un élément de filtre suivant l'une ou l'autre des revendications 1 à 3; un bloc moteur pour créer un gradient de pression négatif à travers la surface filtrante de chaque élément de filtre de l'intérieur vers l'extérieur; une conduite en communication fluide avec ladite partie formant corps et se terminant à l'opposé de ladite partie formant corps par une partie formant entrée; et un réservoir à poussière; de ce fait, en fonctionnement, l'air est aspiré dans la partie formant corps à travers ladite partie formant entrée et via ladite conduite pour précipiter les particules de poussière et de saleté entraînées avec lui sur les surfaces filtrantes intérieures desdits éléments de filtre et, lorsque cesse le gradient de pression négatif, lesdites particules de poussière et de saleté sont recueillies dans ledit réservoir à poussière.

8. Appareil suivant la revendication 6 ou la revendication 7, dans lequel le boîtier est pourvu de moyens pour agiter les éléments de filtre.

9. Appareil suivant la revendication 8, dans lequel les moyens d'agitation comprennent une plaque rotative entraînée par un pignon et une crémaillère, et dotée d'une ou de plusieurs branches qui touchent successivement les extrémités fermées des éléments de filtre, lorsqu'elle est actionnée.

10. Appareil suivant l'une ou l'autre des revendications 6 à 9, caractérisé en ce qu'un réservoir à poussière amovible est situé en dessous des éléments de filtre et en ce que l'assemblage de filtres est apte à rejeter la poussière dans ledit réservoir pour occuper un volume qui ne dépasse pas le volume total des espaces intérieurs des éléments de filtre.

11. Appareil suivant l'une ou l'autre des revendications 6 à 10, comprenant en outre des moyens de détection de différences de pression, associés aux côtés de pression positive et négative des éléments de filtre, afin de détecter ainsi le moment où les filtres sont colmatés.

12. Procédé de filtrage de l'air, dans lequel on aspire un air chargé de poussière sous un gradient de pression négatif dans une pluralité d'éléments de filtre creux, rigides ou substantiellement rigides, autoportants, chaque élément de filtre étant fermé à une première extrémité et étant caractérisé en ce qu'il est pourvu, du côté intérieur, d'une surface filtrante à faible frottement, ladite surface filtrante étant apte à retenir la poussière uniquement lorsqu'un gradient de pression négatif agit à travers ladite surface filtrante de l'intérieur vers l'extérieur, et de ce fait, lorsque cesse ledit gradient de pression négatif, ladite surface filtrante à faible frottement facilite la séparation des particules de poussière dudit élément de filtre.

## Patentansprüche

1. Starrer oder im wesentlichen starrer, selbsttragender, hohler Filtereinsatz, der an einem Ende geschlossen und dadurch gekennzeichnet ist, daß er in seinem Inneren mit einer Filtrieroberfläche mit geringer Reibung ausgestattet ist, wobei die genannte Filtrieroberfläche so ausgelegt ist, daß sie nur dann Staub zurückhält, wenn ein Negativdruck-Gradient von innen nach außen über die genannte Filtrieroberfläche wirkt, wodurch nach Beendigung des genannten Negativdruck-Gradienten die genannte Filtrieroberfläche mit geringer Reibung das Lösen von Staubteilchen von dem genannten Filtereinsatz unterstützt.

2. Einsatz nach Anspruch 1, gebildet aus gesintertem Polyethylen.

3. Einsatz nach Anspruch 1 oder 2 mit einer zylindrischen Form, der an seinem von dem geschlossenen Ende entfernten Ende in einem Schraubgewindeabschnitt endet.

4. Baugruppe aus einer Mehrzahl von Filtereinsätzen nach einem der Ansprüche 1 bis 3, in regelmäßigen Abständen auf einer Montageplatte angeordnet.

5. Baugruppe nach Anspruch 4, wobei die Montageplatte einen kreisförmigen Querschnitt aufweist und die Filtereinsätze konzentrisch angeordnet sind.

6. Filtereinrichtung mit einem Gehäuse, einer Vorrichtung zum Erzeugen eines Negativdruckes innerhalb des Gehäuses, um auf diese Weise den Negativdruck auf eine Baugruppe nach Anspruch 4 oder 5 oder auf einen damit in Wirkverbindung stehenden Filtereinsatz nach Ansprüchen 1 bis 3 aufzubringen.

7. Vakuumreinigungseinrichtung, umfassend einen Körperabschnitt, der eine Baugruppe nach Ansprüchen 4 und 5 oder einen Filtereinsatz nach einem der Ansprüche 1 bis 3 aufnimmt; eine Motoreinheit zum Erzeugen eines Negativdruck-Gradienten über die Filtrieroberfläche jedes Filtereinsatzes von innen nach außen; einen Kanal in fluidischer Verbindung mit dem genannten Körperabschnitt, wobei der Kanal in den Körperabschnitt von dem genannten Körperabschnitt entfernt in einem Einlaßteil endet; und einen Staubaufnahmebehälter, durch den bei Betrieb Luft durch den genannten Einlaßteil und über den genannten Kanal eingesaugt wird, damit sich darin mitgeführte Staub- und Schmutzteilchen an den inneren Filtrieroberflächen der genannten Filtereinsätze absetzen, und nach Beendigung des genannten Negativdruck-Gradienten die genannten Staub- und Schmutzteilchen in dem genannten Staubaufnahmebehälter aufgefangen werden.

8. Einrichtung nach Anspruch 6 oder Anspruch 7, wobei das Gehäuse mit einer Vorrichtung zum Schütteln der Filtereinsätze ausgestattet ist.

9. Einrichtung nach Anspruch 8, wobei die Schüttelvorrichtung eine zahnstangengetriebene Drehplatte aufweist, die mit einem oder mehreren Ansätzen ausgebildet ist, die nach dem Betätigen nacheinander die geschlossenen Enden der Filtereinsätze berühren.

10. Einrichtung nach einem der Ansprüche 6 bis 9, dadurch gekennzeichnet, daß sich unterhalb der Filtereinsätze ein abnehmbarer Staubaufnahmebehälter befindet und daß die Filterbaugruppe Staub in den genannten Aufnahmebehälter ausstößt, so daß ein Volumen beansprucht wird, das das Gesamtvolumen der Innenräume der Filtereinsätze nicht überschreitet.

11. Einrichtung nach einem der Ansprüche 6 bis 10, die zusätzlich eine Vorrichtung zum Erfassen des Differentialdruckes umfaßt, wobei die Vorrichtung mit den Positiv- und Negativdruckseiten der Filtereinsätze verbunden ist, um auf diese Weise zu erfassen, wann die Filtereinsätze verstopft sind.

12. Luftfiltrierungsverfahren, umfassend das Saugen von staubbeladener Luft unter einem Negativdruck-Gradienten in eine Mehrzahl von starren oder im wesentlichen starren, selbsttragenden, hohlen Filtereinsätzen, wobei jeder Filtereinsatz an einem Ende geschlossen und dadurch gekennzeichnet ist, daß er in seinem Inneren mit einer Filtrieroberfläche mit geringer Reibung ausgestattet ist, wobei die genannte Filtrieroberfläche so ausgelegt ist, daß sie nur dann Staub zurückhält, wenn ein Negativdruck-Gradient von innen nach außen über die genannte Filtrieroberfläche wirkt, wodurch nach Beendigung des genannten Negativdruck-Gradienten die genannte Filtrieroberfläche mit geringer Reibung das Lösen von Staubteilchen von dem genannten Filtereinsatz erleichtert.

# FIG.1

*FIG.2*

7

15 — 14

*FIG.3*

7

11

16

*FIG.4*

*FIG.5*

## FIG.6